# EUROPEAN PATENT SPECIFICATION

(11) **EP 4 702 244 B1**
(45) Date of publication and mention of the grant of the patent: **08.04.2026**
(21) Application number: 24758016.0
(22) Date of filing: 19.07.2024
(51) Int. Cl.: F04B 15/02, F04B 53/10, F16K 1/38, F16K 1/42, F16K 15/06

(54) **VALVE**
VENTIL
SOUPAPE

(30) Priority: 28.07.2023 GB 202311670
(43) Date of publication of application: 04.03.2026
(73) Proprietor: Weir Minerals Netherlands B.V., 5928 PH Venlo (NL)
(72) Inventor: STROEKEN, Johannes, 6043 JS Roermond (NL); ADHIKARI, Sudip, 5616 HG Eindhoven (NL)
(74) Representative: MacLeod, Roderick William
(86) International application number: PCT/IB2024/057024
(87) International publication number: WO 2025/027437

(56) References cited:
- CN-U- 203 926 823
- DE-A1- 102020 131 798
- GB-A- 1 071 178
- US-A1- 2002 159 903
- US-B1- 8 915 722

## Description

### FIELD OF INVENTION

This invention relates to a valve. It also relates to a pump including such a valve.

### BACKGROUND OF THE INVENTION

One type of valve is a self-actuated valve. A self-actuated valve is designed to open when there is only a small pressure differential across the valve, such as less than 100 kPa (1 bar). This pressure differential only has to overcome the force acting to close the valve, which is typically gravitational force and, where a spring is used to assist closing, the force of the spring that urges the valve to the closed position. Unlike actuated valves, that can open when there is a large pressure difference across the valve, a self-actuated valve has specific design constraints.

Self-actuated valves have been available for many decades, and there are many design variations of these valves.

One particularly challenging environment for self-actuating valves to operate in is in pumping slurries. Slurries are two-phase fluids that include solid particles suspended in liquid, for example, as a paste or as a settling slurry. Slurries typically have a solids concentration of at least 5% by weight. In valves, abrasive wear is typically the dominant wear type (particularly at the area where the valve seat meets the valve body), and is particularly problematic when pumping slurries having a relatively high solids concentration of hard or abrasive particles. Self-actuating valves are not suitable for use in pumping pastes, such as two phase mixtures having a yield stress higher than approximately 100 Pascals.

One consideration in valve design relates to the angle of the valve seat contact surface (measured with respect to the longitudinal axis of the valve). For valves used in slurry pumping the valve seat angle is selected to be at an angle of between 33 and 37 degrees to the longitudinal axis. One valve seat angle typically used is 35 degrees. This valve seat angle has the advantage of guiding the valve body when other guiding features, such as an upper stem and lower legs, wear down. This guiding feature remains even when the valve seat wears.

When the valve body has only lifted by a small amount from the valve seat, the flow of fluid through the gap between the valve body and valve seat is significantly higher than the flow of fluid through the aperture defined by the valve seat cross section. This causes high erosional wear on the housing which is normally a less erosion resistant material than the hardened valve seat and valve body. The housing cost is significantly higher for larger diameter chambers due to increased sidewall thickness needed for high pressure applications to resist fatigue. This valve seat angle of approximately 35 degrees has the advantage of limiting erosional wear on the housing above the valve seat, typically referred to as "jetting".

It is desirable to obviate or mitigate these wear patterns in valves.

It is among the objects of an embodiment of this invention to provide means which may at least ameliorate this problem or provide a useful alternative.

CN 203 926 823 U discloses a multi-angle erosion-resistant slurry valve.

DE 10 2020 131798 A1 discloses a piston pump for a high-pressure cleaning device with a pump housing.

### SUMMARY

This summary is provided to introduce a selection of concepts that are further described in the detailed description below. This summary is not intended to identify indispensable features of the claimed subject matter, nor is it intended for use as an aid in limiting the scope of the claimed subject matter.

In this application ordinal numbers (first, second, third, etc.) are assigned arbitrarily herein, and are used to differentiate between parts, and do not indicate a particular order, sequence, or importance.

According to a first aspect there is provided a self-actuated valve as set forth in claim 1.

Optionally, the contact area of the valve body has an outer profile different from the outer profile of the radially inner portion of the valve seat. The contact area of the valve body may be narrower (or substantially narrower) than the thickness of the valve seat. This is particularly advantageous for all metal valve and valve seat combinations (without an elastomer valve ring) because this creates an annular line contact ensuring that the contact area of the valve body with the valve seat is relatively small thereby reducing wear caused by contact and abrasion and the likelihood of the valve body sticking to the valve seat. The thickness of the valve seat refers to the distance of the valve seat between its annular inner surface (which typically defines a flow path) and its annular outer surface (which is typically in contact with a bore in which the valve seat is mounted).

Optionally, the radially inner portion first angle is greater than 41 degrees, 42 degrees, 43 degrees, 44 degrees, or 45 degrees.

Optionally, the radially inner portion first angle is also smaller than 75 degrees, 70 degrees, 65 degrees, 60 degrees, or 55 degrees. It is thought that if the radially inner portion is larger than approximately 55 degrees then the valve seat will lose its ability to centre the valve.

Optionally, the radially outer portion second angle is smaller than 37 degrees, 36 degrees, or 35 degrees.

Optionally, the radially inner and outer portions may be connected at a transition point or radius. Alternatively, the radially inner and outer portions may be connected by a continuous sloping portion that blends the two angles. The continuous sloping portion may be longer than either the radially inner or outer portions.

Using a relatively shallow angle (relative to a line perpendicular to the longitudinal axis) for the first angle reduces wear in the contact zone between the valve body and the valve seat. Using a relatively steep angle (relative to a line perpendicular to the longitudinal axis) for the second angle diverts high velocity slurry (typically five times the velocity of slurry through the flow path defined by the valve seat) away from a housing sidewall, thereby reducing erosional wear on an inner surface of the housing sidewall. This combination of angles optimises low contact zone wear and low housing wear. Using angled surfaces (rather than surfaces parallel or perpendicular to the longitudinal axis) ensures effective guidance of the valve body and lower wear for the valve body contact area.

Optionally, the valve body contact area outer profile is shaped so that only an annular portion thereof is in contact with the radially inner portion of the valve seat. This is advantageous as this ensures that the area of the valve body which contacts the valve seat is relatively small.

Optionally, the valve body contact area outer profile comprises an initial contact ring that engages with the radially inner portion at a generally central portion thereof to prevent contact stresses adversely affecting the valve seat or valve body.

Optionally, the outer profile of the valve body is shaped so that the annular portion in contact with the radially inner portion of the valve seat moves axially but not significantly radially as it wears. This ensures that as the initial contact ring wears during use, contact stresses are not created at the tips or edges. As would happen if the contact ring moved towards either edge.

Having a relatively small valve body area that is in contact with the valve seat, reduces the likelihood of the valve body sticking to (i.e. remaining in contact longer than it should with) the valve seat. This also reduces the likelihood of extrusion damage or "grooving".

Optionally, the valve body contact area outer profile comprises a convex shape (in cross section). Alternatively, the valve body contact area outer profile comprises a continuous slope at a third angle (in cross section) different from the first angle. Other shapes are possible.

Optionally, the valve body comprises a central body portion and a transition portion extending downwards from a lower face of the central body portion. The contact area of the valve body may extend from the lower face towards an outer cylindrical surface of the valve body.

Optionally, the outer cylindrical surface may extend at least 40% (in some embodiments at least 50%, 60%, 70%) of the total height of the valve body.

Alternatively or in addition, the height (longitudinal length) of the outer cylindrical surface may be at least 20% (in some embodiment, 30%, 40%, 50%, 60%, 70%) of the height (longitudinal length) of the contact area.

Optionally, the valve body and the valve seat both comprise metal, such as a pure metal or an alloy.

Preferably, the valve seat is of unitary construction.

The valve seat may comprise an integral portion of a support (such as the housing) or a removable part that can be replaced when worn.

The valve seat may be annular and arranged around the flow path such that the flow path extends therethrough. When the valve body is in the closed position, the valve seat may have a higher pressure side and a lower pressure side, the outer diameter of the valve seat may decrease for at least part of its length from the higher pressure side towards the lower pressure side. In one embodiment, the valve seat comprises two frusto-conical portions, each having a constant angle of taper from its higher pressure side to its lower pressure side.

The valve seat may define a flow path therethrough that is substantially wider than the thickness of the valve seat.

The valve seat may be located within and mounted against a flow path bore and may define a flow path therethrough. The diameter (width) of the flow path may be at least 50% larger (in some embodiments, 60%, 70%, 80%, 90%, or 100% larger) than the thickness of the valve seat to allow a relatively large amount of fluid to pass through the flow path. As described above, the thickness refers to the radial distance between an inner surface and an outer surface of the valve seat.

The valve seat may extend along the longitudinal axis for a distance greater than the longitudinal distance (the distance along the longitudinal axis) that the valve body moves between the open and closed position of the valve. This allows alignment legs extending below a central portion of the valve body to remain in contact with the valve seat while the valve is open and closed.

The flow path defined by the valve seat may be larger (in some embodiments at least 50%, 60%, 70%, or 80% larger) than a cylindrical stem portion of a valve body.

The valve is a self-actuated valve.

Experimental results for valves made according to the first aspect have shown surprisingly good results. An increase in valve life for wear failure modes would be expected based on those results.

Optionally the valve may be a sleeveless valve. The term "sleeveless valve" refers to a valve that does not include an elastomeric seal (also known as a valve ring); such a sleeveless valve may comprise an all metal valve.

According to a second aspect there is provided a pump including one or more valves according to the first aspect.

According to an unclaimed aspect there is provided a valve seat defining a longitudinal axis and comprising: (i) a radially inner non-horizontal portion for engaging with a valve body and extending substantially at a first angle greater than 40 degrees relative to a line parallel to a longitudinal axis of the valve seat, and (ii) a radially outer non-vertical portion extending from the radially inner portion substantially at a second angle smaller than 38 degrees relative to a line parallel to the longitudinal axis.

"Non-horizontal" means not parallel to a line perpendicular to the longitudinal axis of the valve seat; and "non-vertical" means not parallel to the longitudinal axis of the valve seat.

The radially inner and outer portions may be connected at a point (in cross-section). Alternatively, the radially inner and outer portions may be connected by a continuous sloping portion that blends the two angles. The continuous sloping portion may be longer than either the radially inner or outer portions.

According to a third aspect there is provided a valve housing including one or more valves according to the first aspect.

The valve seat may comprise an integral portion of the valve housing or a removable part that can be replaced when worn.

It should be appreciated that angles selected within the ranges described above provide significantly improved performance of valves, particularly when used to pump slurries.

### BRIEF DESCRIPTION OF THE DRAWINGS

These and other aspects of the invention will now be described, by way of example, with reference to the accompanying drawings, in which:
Figure 1 is a simplified (without hatching) sectional elevation view of a self-actuated valve in accordance with an embodiment of the invention, where the valve is in an open position;
Figure 2 is a simplified (without hatching) sectional elevation view of the valve of Figure 1, where the valve is in a closed position;
Figure 3 is an enlarged view of a detail of Figure 1, showing part of the valve body contact area outer profile and the valve seat;
Figure 4 is an enlarged view of a detail of an alternative design of valve body contact area outer profile;
Figure 5 is a graph illustrating the influence of the valve seat angle on the wear experienced by the valve seat;
Figure 6 is a sectional perspective view of an alternative design of the valve;
Figure 7 is a sectional elevation view of the valve seat of the valve of Figure 6; and
Figure 8 is an enlarged view of a detail of Figure 7, showing part of the valve seat.

### DETAILED DESCRIPTION OF EMBODIMENTS

Reference will now be made to the drawings, in which reference numeral 10 indicates a self-actuated valve according to one embodiment of the present invention. In this embodiment, the self-actuated valve 10 comprises a sleeveless valve. The self-actuated valve 10 defines a longitudinal axis 12, and includes a housing, part of which is shown in the drawings and is generally indicated by reference numeral 14. The housing 14 includes a chamber (or housing) wall 16 partially enclosing a pump chamber 18.

A first fluid port, indicated generally by numeral 22 (in this embodiment an inlet), and a second fluid port, indicated generally by numeral 24 (in this embodiment an outlet) are each defined by the housing 14, and a flow path extends through the housing 14 and connects the fluid ports 22, 24 in flow communication. In this embodiment, the inlet 22 is oriented transverse (in this example, perpendicular) to the outlet 24. In an alternative embodiment, the inlet and outlet may be longitudinally aligned.

Fluid, particularly a slurry (a liquid containing solid particles), is transported from the inlet 22, through the chamber 18, to the outlet 24. In this embodiment, the solids concentration of the slurry is approximately 35% by weight, but slurries having other solids concentration may be transported (for example, between 5% and 40% solids concentration).

The valve 10 further includes a valve seat, generally indicated by reference numeral 28, which is positioned between the two fluid ports 22, 24. In one embodiment, the valve seat 28 may be formed by a hardened surface in the housing 14. In another embodiment, shown in the drawings, the valve seat 28 is formed by an insert mounted on the housing 14 which facilitates replacement of the valve seat 28 when worn. A pair of elastomeric O-rings 30 are located between the valve seat 28 and the housing 14. A fluid channel 32 is provided to allow hydraulic fluid to be injected to assist in removing the valve seat 28 when desired.

The valve seat 28 defines a part of the flow path. The valve seat 28 comprises an upper portion 40 having a narrow end 42 and a wider end 44, and a generally cylindrical lower portion 46 extending downwards from the narrow end 42 of the upper portion 40. In other embodiments, the valve seat 28 may have a different shape.

The valve 10 further includes a valve body 50 comprising: a central body portion 52, a transition portion 54 extending downwards from a lower face 55 of the central body portion 52 and alignment legs 56 extending radially outward from the transition portion 54. The lower face 55 is generally planar in this embodiment, but may have a different shape in other embodiments. In use, at least one of the alignment legs 56 makes contact (at least intermittently) with the generally cylindrical portion 46 of the valve body 50 to assist with centralising the valve body 50 when the valve 10 is opening and closing. In this embodiment, the alignment legs 56 (and/or the transition portion 54) are friction welded to the central body portion 52. In this embodiment, the central body portion 52 is a unitary cast component, but in other embodiments it may comprise separable components and may be manufactured using other techniques than casting, e.g. forging, and connected using any convenient technique (welding or the like).

A valve housing cover 60 is provided to close the chamber 18 above the valve body 50. A clamping portion 62 defines (i) a support portion 64 mounted to an underside of the valve housing cover 60, and (ii) cylindrical guide 66 extending downwards from the support portion 64, and located generally centrally thereon. The cylindrical guide 66 defines a central guide channel 68 therein, and an outer cylindrical surface 70. The central guide channel 68 is in fluid communication with the chamber 18. A wear resistant cylindrical guide bush 72 is mounted at an entrance of the central guide channel 68 as an interference fit thereto (although other coupling methods may be used, such as a circlip or a tag weld). A coil spring 74 is mounted around the outer cylindrical surface 70. In other embodiments, the cylindrical guide bush 72 may be mounted and held in place by a circlip.

The central body portion 52 defines a cylindrical stem portion 80 extending upwards along longitudinal axis 12. The cylindrical stem portion 80 is located within the central guide channel 68 and in sliding contact with the cylindrical guide bush 72. A lower part of the coil spring 74 is in contact with an upper part of the central body portion 52. The coil spring 74 prevents the valve body 50 from opening until a desired pressure differential is reached, but its primary function is to limit the lift height to ensure high volumetric efficiency of the pump and higher stroke rates.

The cylindrical stem portion 80 which is located in the central guide channel 68 and which is in contact with the cylindrical guide bush 72 provides additional support to the valve body when the valve 10 is opening and closing. The addition of the alignment legs 56 reduces the risk of the valve body tilting when the valve 10 is opening and closing which eliminates the risk of the upper cylindrical stem portion failing.

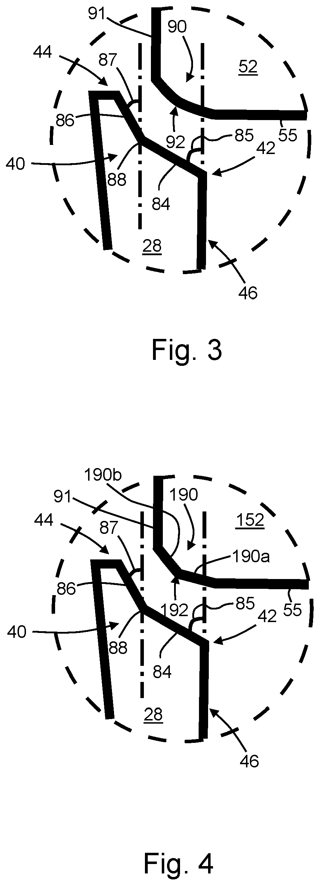

Referring specifically to Figure 3, the valve seat 28 comprises a radially inner portion 84 for engaging with the valve body 50, specifically an engagement portion 90 of the central body portion 52, and a radially outer portion 86 extending from the radially inner portion 84. The radially inner portion 84 is located at the narrow end 42 of the upper portion 40. The radially outer portion 86 is located at the wider end 44 of the upper portion 40.

The radially inner portion 84 extends substantially at a first angle 85 greater than 40 degrees relative to a line parallel to the longitudinal axis 12; in this embodiment the angle 85 is approximately 45 degrees.

The radially outer portion 86 extends from the radially inner portion 84 substantially at a second angle 87 smaller than 38 degrees relative to a line parallel to the longitudinal axis 12; in this embodiment the second angle 87 is approximately 35 degrees.

The radially inner 84 and outer 86 portions are connected at a ring 88 (which appears as a point in cross section, although it may be a small radius in practice). In other embodiments, the radially inner 84 and outer 86 portions may be connected by a continuous sloping portion that blends the two angles.

The central body portion 52 defines the seat engagement portion 90 at a lower part thereof. In this embodiment, the seat engagement portion 90 extends between the generally planar lower face 55 and a generally cylindrical surface 91 of the central body 52. In this embodiment, the seat engagement portion 90 comprises a convex profile. The seat engagement portion 90 provides a contact area having an outer profile different from the radially inner portion 84 of the valve seat 28. Having a convex profile ensures that only an annular portion (an initial contact ring 92) thereof is in contact with the radially inner portion 84 of the valve seat 28. The initial contact ring 92 engages with the radially inner portion 84 at a generally central position of the radially inner portion 84. As the seat engagement portion 90 wears due to the action of the slurry being transported, the annular portion (initial contact ring 92) in contact with the radially inner portion 84 of the valve seat 28 typically moves axially upwards, but not radially by any significant amount (except for a slight enlargement in each radial direction). In other embodiments, a different profile may be selected for the seat engagement portion 90 if it is desired that the initial contact ring 92 is located at a different position and/or that subsequent contact rings move radially outwards or radially inwards.

It is to be appreciated that the generally planar lower face 55 and a generally cylindrical surface 91 of the central body 52 are not in contact with the valve seat 28 and only the seat engagement portion 90 makes contact with the radially inner portion 84 of the valve seat 28. The initial contact ring 92 comprises the contact area of the valve body 50. It is further to be appreciated that the initial contact ring 92 may be at any point between the cylindrical portion 91 and the lower face 55 radially inside the cylindrical portion 91. In an alternative embodiment, the initial contact ring 92 may be adjacent the cylindrical portion 91.

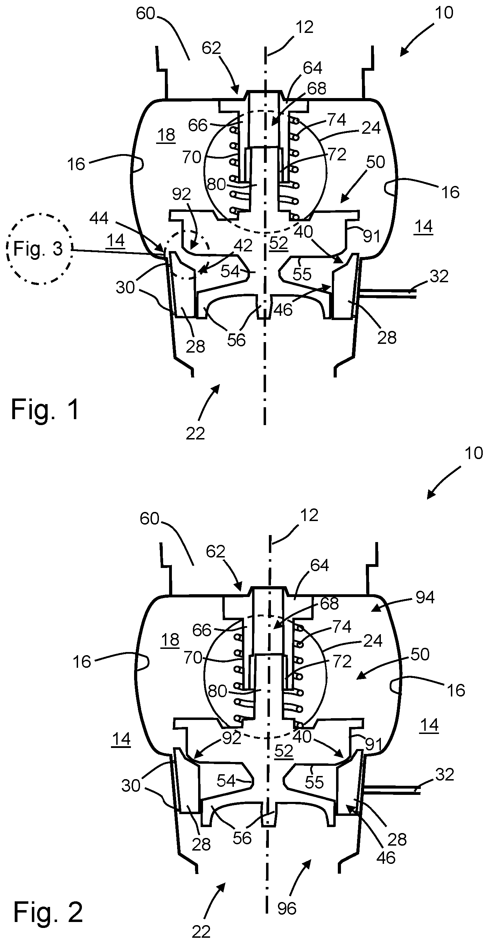

When the valve body 50 is in the closed position, as shown in Figure 2, the valve seat 28 has a higher pressure side 94 (within the pump chamber 18) and a lower pressure side 96 (at the fluid inlet 22). In the above embodiment, as described above, the diameter of the valve seat 28 decreases for at least part of its length from the higher pressure side 94 towards the lower pressure side 96. The valve seat 28 comprises two frusto-conical portions 84, 86, each having a constant angle of taper from its higher pressure side to its lower pressure side.

Using a relatively shallow angle (relative to a line perpendicular to the longitudinal axis 12) for the first angle 85 reduces wear in the contact zone between the seat engagement portion 90 of the valve body 50 and the valve seat 28. Using a relatively steep angle (relative to a line perpendicular to the longitudinal axis 12) for the second angle 87 diverts high velocity slurry away from the housing wall 16, thereby reducing erosional wear on an inner surface of the housing wall 16. This combination of angles 85, 87 optimises low contact zone wear and low housing 14 wear.

In the example embodiment, the longitudinal distance between the contact area 92 and a portion where the cylindrical stem portion 80 contacts the cylindrical guide bush 72 is larger than the width of the contact area 92 of the valve body 50.

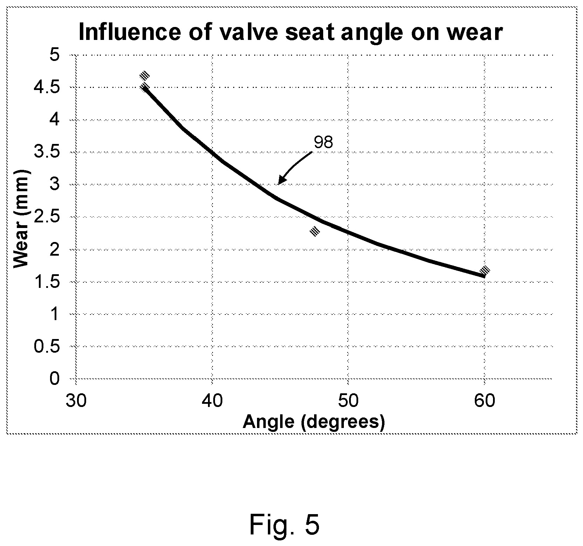

Figure 5 is a graph that shows measured wear heights for four valves. These four measurements were for three different valve seat angles (35 degrees (two measurements), 47.5 degrees, and 60 degrees), together with a best fit line 98. This shows that increasing the slope (angle 85) of the valve seat 28 reduces the amount of wear experienced by the valve seat 28.

An alternative design of valve body having a different central body portion 152 is shown in Figure 4. This illustrates a seat engagement portion 190 having two frusto-conical portions 190a, 190b, each having a constant angle of taper from its higher pressure side to its lower pressure side and meeting at an initial contact ring 192. In this embodiment, the seat engagement portion 190, more specifically the two frusto-conical portions 190a,190b, extend from a generally planar lower face and a generally cylindrical surface of the central body 152 towards each another. The initial contact ring 192 comprises the contact area of the valve body 150. The valve seat 28 design is unchanged.

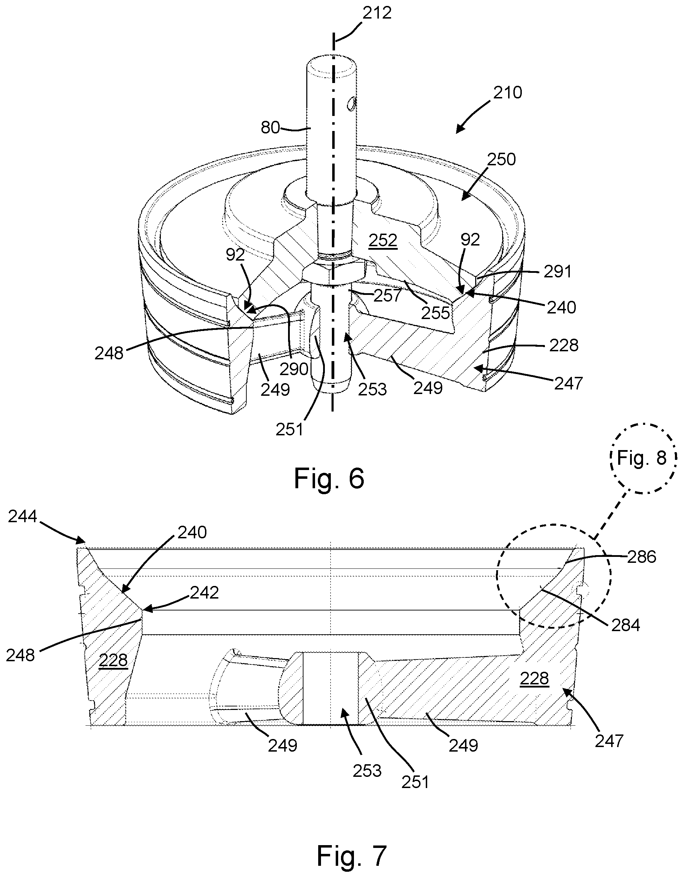

A further alternative design of a valve 210 including a valve body 250 and valve seat 228 is shown in Figures 6-8.

The valve seat 228 comprises an upper portion 240 having a narrow end 242 and a wider end 244; a lower portion 247 and a generally cylindrical portion 248 extending between the upper portion 240 and the lower portion 247. The valve seat 228 further includes circumferentially spaced supports 249 extending radially inward from the lower portion 247 towards a cylindrical guide 251 having a central opening 253.

The valve body includes a valve body 250 comprising a central body portion 252 and lower central stem 257 extending downwards from a lower face 255. The lower central stem 257 is located within and in sliding contact with the central opening 253 of the cylindrical guide 251. The lower central stem 257 which is located within the cylindrical guide 251 provides additional support to the valve body 252 when the valve 210 is opening and closing.

The valve body 250 includes a seat engagement portion 290 which extends between the lower face 255 and a cylindrical portion 291.

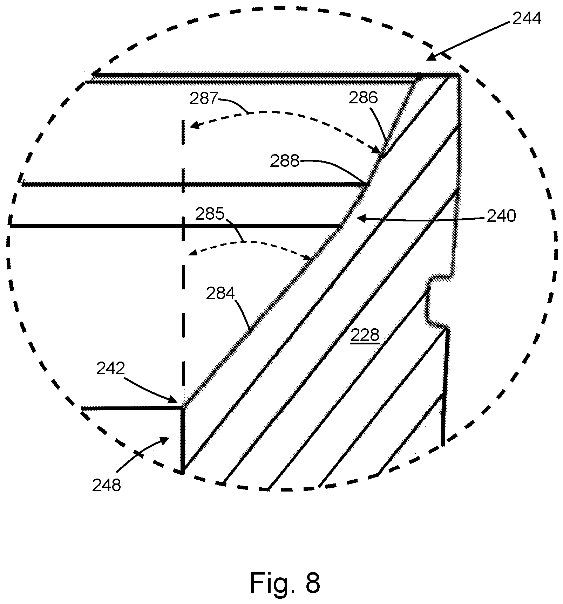

Referring specifically to Figure 8, the valve seat 228 comprises a radially inner portion 284 for engaging with the valve body 250, specifically an engagement portion 290 of the central body portion 252, and a radially outer portion 286 extending from the radially inner portion 284. The radially inner portion 284 is located at the narrow end 242 of the upper portion 240. The radially outer portion 286 is located at the wider end 244 of the upper portion 240.

The radially inner portion 284 extends substantially at a first angle 285 greater than 40 degrees relative to a line parallel to the longitudinal axis 212; in this embodiment the angle 285 is approximately 47.5 degrees.

The radially outer portion 286 extends from the radially inner portion 284 substantially at a second angle 287 smaller than 38 degrees relative to a line parallel to the longitudinal axis 212; in this embodiment the second angle 287 is approximately 30 degrees.

The radially inner 284 and outer 286 portions are connected at a ring 288 (which appears as a point in cross section, although it may be a small radius in practice). In other embodiments, the radially inner 284 and outer 286 portions may be connected by a continuous sloping portion that blends the two angles.

The valve 10, 210 described above could be used in any convenient application, for example in a positive displacement pump, or in the check valve in the discharge line after any type of pump. The valve 10, 210 may be used as an inlet valve or an outlet valve, in any convenient orientation.

Various modifications to the above described embodiments may be made within the scope of the present invention. For example, many of the dimensions and ratios given above include a range from which a value can be selected; embodiments can be created using a different value from each of these ranges, thereby providing a very large number of unique embodiments.

In other embodiments, the valve may include a valve ring (optionally, in the form of an elastomeric seal) mounted on the central body portion 52 or 152 above the seat engagement portion 90, 190 as an interference fit.

In other embodiments, the valve 10, 210 may be mounted in an inverse orientation to that shown in Figures 1 and 2 (i.e. upside down), or at an angle. If mounted upside down then gravity will assist with opening the valve 10, 210.

### LIST OF REFERENCE NUMERALS

Self-actuated valve 10, 210
Longitudinal axis 12, 212
Housing 14
Chamber wall 16
Pump chamber 18
First fluid port (inlet) 22
Second fluid port (outlet) 24
Valve seat 28, 228
O-rings 30
Hydraulic fluid channel 32
Upper portion 40, 240
Narrow end (of upper portion) 42, 242
Wider end (of upper portion) 44, 244
Cylindrical lower portion 46
Valve body 50, 250
Central body portion (of valve body) 52, 152, 252
Transition portion (of valve body) 54
Lower face (of valve body) 55, 255
Alignment legs (of valve body) 56
Valve housing cover 60
Clamping portion 62
Support portion (of clamping portion) 64
Cylindrical guide (of clamping portion) 66
Central guide channel (of cylindrical guide) 68
Outer cylindrical surface (of cylindrical guide) 70
Cylindrical guide bush (of cylindrical guide) 72
Coil spring 74
Cylindrical stem portion (of central body portion) 80
Radially inner portion (of valve seat) 84, 284
Radially outer portion (of valve seat) 86, 286
First angle (of radially inner portion) 85, 285
Second angle (of radially outer portion) 87, 287
Ring 88, 288
Seat engagement portion 90, 290
Cylindrical surface (of valve body) 91
Initial contact ring 92, 192
Higher pressure side (of valve seat) 94
Lower pressure side (of valve seat) 96
Best fit line (of graph) 98
Seat engagement portion 190
   Inner frusto-conical portion 190a
   Outer frusto-conical portion 190b
Lower portion 247
Cylindrical portion 248
Circumferentially spaced supports 249
Cylindrical guide 251
Central opening (of cylindrical guide) 253
Lower central stem 257

## Claims

1. A self-actuated valve (10, 210) defining a longitudinal axis (12, 212) and comprising a valve seat (28, 228) and a valve body (50, 250) for positioning in a flow path; the valve seat (28, 228) comprising:
(i) a radially inner portion (84, 284) for engaging with a contact area of the valve body (50, 250) and extending substantially at a first angle (85, 285) greater than 40 degrees and less than 80 degrees relative to the longitudinal axis (12, 212), and
(ii) a radially outer portion (86, 286) extending from the radially inner portion (84, 284) substantially at a second angle (87, 287) smaller than 38 degrees and greater than 10 degrees relative to the longitudinal axis (12, 212), the radially outer portion (86, 286) located outside the contact area of the valve body (50, 250) such that the valve body (50, 250) is not in contact with the radially outer portion (86, 286) when the valve (10, 210) is closed.

2. A self-actuated valve according to claim 1, wherein the contact area of the valve body (50, 250) has an outer profile different from the outer profile of the radially inner portion (84, 284) of the valve seat (28, 228).

3. A self-actuated valve according to claim 1 or 2, wherein the radially inner portion first angle (85, 285) is greater than 44 degrees.

4. A self-actuated valve according to any of claims 1 to 3, wherein the radially outer portion second angle (87, 287) is smaller than 36 degrees.

5. A self-actuated valve according to any preceding claim, wherein the radially inner (84, 284) and outer (86, 286) portions are connected at an annulus (88, 288).

6. A self-actuated valve according to any of claims 1 to 4, wherein the radially inner (84, 284) and outer (86, 286) portions are connected by a continuous sloping portion that blends the two angles.

7. A self-actuated valve according to any preceding claim, wherein the valve body contact area outer profile is shaped so that only an annular portion thereof is in contact with the radially inner portion (84, 284) of the valve seat (28, 228).

8. A self-actuated valve according to any preceding claim, wherein the valve body contact area outer profile comprises an initial contact ring (92, 192) that engages with the radially inner portion (84, 284) at a generally central part of the radially inner portion (84, 284).

9. A self-actuated valve according to claim 8, wherein the outer profile of the valve body (50, 250) is shaped so that the annular portion in contact with the radially inner portion (84, 284) of the valve seat (28, 228) moves primarily axially as it wears.

10. A self-actuated valve according to claim 8, wherein the valve body contact area (90) outer profile comprises a convex shape in cross section.

11. A self-actuated valve according to claim 8, wherein the valve body contact area outer profile comprises a continuous slope at a third angle different from the first angle.

12. A pump including one or more self-actuated valves (10, 210) according to any preceding claim.

13. A valve housing including one or more self-actuated valves (10, 210) according to any one of claims 1 to 11.

## Patentansprüche

1. Selbsttätig arbeitendes Ventil (10, 210), das eine Längsachse (12, 212) definiert und einen Ventilsitz (28, 228) und einen Ventilkörper (50, 250) zur Positionierung in einem Strömungspfad umfasst; wobei der Ventilsitz (28, 228) Folgendes umfasst:
(i) einen radial inneren Abschnitt (84, 284) zum Eingriff mit einem Kontaktbereich des Ventilkörpers (50, 250), der sich im Wesentlichen in einem ersten Winkel (85, 285) von mehr als 40 Grad und weniger als 80 Grad in Bezug auf die Längsachse (12, 212) erstreckt, und
(ii) einen radial äußeren Abschnitt (86, 286), der sich von dem radial inneren Abschnitt (84, 284) im Wesentlichen in einem zweiten Winkel (87, 287) von weniger als 38 Grad und mehr als 10 Grad in Bezug auf die Längsachse (12, 212) erstreckt, wobei sich der radial äußere Abschnitt (86, 286) außerhalb des Kontaktbereichs des Ventilkörpers (50, 250) befindet, sodass der Ventilkörper (50, 250) nicht in Kontakt mit dem radial äußeren Abschnitt (86, 286) ist, wenn das Ventil (10, 210) geschlossen ist.

2. Selbsttätig arbeitendes Ventil nach Anspruch 1, wobei der Kontaktbereich des Ventilkörpers (50, 250) ein Außenprofil aufweist, das sich von dem Außenprofil des radial inneren Abschnitts (84, 284) des Ventilsitzes (28, 228) unterscheidet.

3. Selbsttätig arbeitendes Ventil nach Anspruch 1 oder 2, wobei der erste Winkel (85, 285) des radial inneren Abschnitts größer als 44 Grad ist.

4. Selbsttätig arbeitendes Ventil nach einem der Ansprüche 1 bis 3, wobei der zweite Winkel (87, 287) des radial äußeren Abschnitts kleiner als 36 Grad ist.

5. Selbsttätig arbeitendes Ventil nach einem der vorhergehenden Ansprüche, wobei der radial innere (84, 284) und äußere (86, 286) Abschnitt an einem Ring (88, 288) verbunden sind.

6. Selbsttätig arbeitendes Ventil nach einem der Ansprüche 1 bis 4, wobei der radial innere (84, 284) und äußere (86, 286) Abschnitt durch einen durchgehenden geneigten Abschnitt verbunden sind, der die beiden Winkel zusammenführt.

7. Selbsttätig arbeitendes Ventil nach einem der vorhergehenden Ansprüche, wobei das Außenprofil des Ventilkörperkontaktbereichs so geformt ist, dass nur ein ringförmiger Abschnitt davon in Kontakt mit dem radial inneren Abschnitt (84, 284) des Ventilsitzes (28, 228) ist.

8. Selbsttätig arbeitendes Ventil nach einem der vorhergehenden Ansprüche, wobei das Außenprofil des Ventilkörperkontaktbereichs einen Anfangskontaktring (92, 192) umfasst, der mit dem radial inneren Abschnitt (84, 284) an einem im Allgemeinen zentralen Teil des radial inneren Abschnitts (84, 284) in Eingriff steht.

9. Selbsttätig arbeitendes Ventil nach Anspruch 8, wobei das Außenprofil des Ventilkörpers (50, 250) so geformt ist, dass sich der ringförmige Abschnitt in Kontakt mit dem radial inneren Abschnitt (84, 284) des Ventilsitzes (28, 228) hauptsächlich axial bewegt, wenn er sich abnutzt.

10. Selbsttätig arbeitendes Ventil nach Anspruch 8, wobei das Außenprofil des Ventilkörperkontaktbereichs (90) im Querschnitt eine konvexe Form aufweist.

11. Selbsttätig arbeitendes Ventil nach Anspruch 8, wobei das Außenprofil des Ventilkörperkontaktbereichs eine durchgehende Neigung in einem dritten Winkel, der sich von dem ersten Winkel unterscheidet, aufweist.

12. Pumpe mit einem oder mehreren selbsttätig arbeitenden Ventilen (10, 210) nach einem der vorhergehenden Ansprüche.

13. Ventilgehäuse, das ein oder mehrere selbsttätig arbeitende Ventile (10, 210) nach einem der Ansprüche 1 bis 11 umfasst.

## Revendications

1. Soupape à actionnement automatique (10, 210) définissant un axe longitudinal (12, 212) et comprenant un siège de soupape (28, 228) et un corps de soupape (50, 250) pour le positionnement dans un trajet d'écoulement ; le siège de soupape (28, 228) comprenant :
(i) une portion radialement intérieure (84, 284) destinée à venir en prise avec une zone de contact du corps de soupape (50, 250) et s'étendant sensiblement selon un premier angle (85, 285) supérieur à 40 degrés et inférieur à 80 degrés par rapport à l'axe longitudinal (12, 212), et
(ii) une portion radialement extérieure (86, 286) s'étendant depuis la portion radialement intérieure (84, 284) sensiblement selon un deuxième angle (87, 287) inférieur à 38 degrés et supérieur à 10 degrés par rapport à l'axe longitudinal (12, 212), la portion radialement extérieure (86, 286) étant située en dehors de la zone de contact du corps de soupape (50, 250) de telle sorte que le corps de soupape (50, 250) n'est pas en contact avec la portion radialement extérieure (86, 286) lorsque la soupape (10, 210) est fermée.

2. Soupape à actionnement automatique selon la revendication 1, dans laquelle la zone de contact du corps de soupape (50, 250) a un profil extérieur différent du profil extérieur de la portion radialement intérieure (84, 284) du siège de soupape (28, 228).

3. Soupape à actionnement automatique selon la revendication 1 ou 2, dans laquelle le premier angle (85, 285) de la portion radialement intérieure est supérieur à 44 degrés.

4. Soupape à actionnement automatique selon l'une quelconque des revendications 1 à 3, dans laquelle le deuxième angle (87, 287) de la portion radialement extérieure est inférieur à 36 degrés.

5. Soupape à actionnement automatique selon l'une quelconque des revendications précédentes, dans laquelle les portions radialement intérieure (84, 284) et extérieure (86, 286) sont reliées au niveau d'un anneau (88, 288).

6. Soupape à actionnement automatique selon l'une quelconque des revendications 1 à 4, dans laquelle les portions radialement intérieure (84, 284) et extérieure (86, 286) sont reliées par une portion inclinée continue qui mélange les deux angles.

7. Soupape à actionnement automatique selon l'une quelconque des revendications précédentes, dans laquelle le profil extérieur de la zone de contact du corps de soupape est façonné de telle sorte que seule une portion annulaire de celui-ci est en contact avec la portion radialement intérieure (84, 284) du siège de soupape (28, 228).

8. Soupape à actionnement automatique selon l'une quelconque des revendications précédentes, dans laquelle le profil extérieur de la zone de contact de corps de soupape comprend une bague de contact initiale (92, 192) qui vient en prise avec la portion radialement intérieure (84, 284) au niveau d'une partie généralement centrale de la portion radialement intérieure (84, 284).

9. Soupape à actionnement automatique selon la revendication 8, dans laquelle le profil extérieur du corps de soupape (50, 250) est façonné de telle sorte que la portion annulaire en contact avec la portion radialement intérieure (84, 284) du siège de soupape (28, 228) se déplace principalement axialement à mesure qu'elle s'use.

10. Soupape à actionnement automatique selon la revendication 8, dans laquelle le profil extérieur de la zone de contact (90) du corps de soupape comprend une forme convexe en coupe transversale.

11. Soupape à actionnement automatique selon la revendication 8, dans laquelle le profil extérieur de la zone de contact du corps de soupape comprend une pente continue selon un troisième angle différent du premier angle.

12. Pompe comportant une ou plusieurs soupapes à actionnement automatique (10, 210) selon l'une quelconque des revendications précédentes.

13. Logement de soupape comportant une ou plusieurs soupapes à actionnement automatique (10, 210) selon l'une quelconque des revendications 1 à 11.
